Europäisches Patentamt

(19) European Patent Office

Office européen des brevets

(11) Publication number: **0 217 978**
**A1**

(12) # EUROPEAN PATENT APPLICATION

(21) Application number: **85112870.2**

(22) Date of filing: **10.10.85**

(51) Int. Cl.⁴: **A 01 G 9/24, E 04 B 7/16**

(43) Date of publication of application: **15.04.87 Bulletin 87/16**

(84) Designated Contracting States: **AT BE CH DE FR GB IT LI NL SE**

(71) Applicant: **NUOVA SALCO Soc. Coop. r. l., Regione Rapalline 34, I-17031 Albenga (IT)**

(72) Inventor: **Gottardo, Gianfranco, Via Al Piemonte 32, I-17035 Cisano sul Neva (IT)**

(74) Representative: **Porsia, Bruno et al, c/o Succ. Ing. Fischetti & Weber Via Caffaro 3/2, I-16124 Genova (IT)**

(54) **Opening roof, particularly designed for greenhouses.**

㊳ In an opening roof, particularly designed for greenhouses, sheds and the like having at least one pitch (1) pivotably supported at the lower edge thereof at a stationary fulcrum (4) on a bearing structure (5), said stationary lower fulcrum (4) is constituted by a type of rocker bearing or knife-edge bearing which is formed for example, by the top edge of an upright web (12) fixed to the bearing structure (5) and bearing an inverted V-shaped or U-shaped portion (11) provided at the lower edge of the roof pitch (1), or vice versa.

EP 0 217 978 A1

"Opening roof, particularly designed for greenhouses"

This invention relates to opening roofs particularly designed for greenhouses, sheds and the like, comprising at least one pitch which is pivotably supported at the lower edge thereof at a stationary fulcrum on a bearing structure.

The invention aims to improve said opening roofs so as to remarkably facilitate the manufacturing thereof and to put into effect in a simplified manner the stationary lower fulcrum of the pitch, thus avoiding all drawbacks due to a faulty operation of said fulcrum and so minimizing the cost.

For this purpose, according to the invention, the stationary lower· fulcrum of the roof pitch is consticuted by a type of rocker bearing or knife-edge bearing. Such a rocker bearing or knife edge-bearing may be constituted, for example, by the upper edge of a frame upright fixed to the supporting structure and which bears a channel portion having the shape of an inverted "V" or "U" and provided at the lower edge of the roof pitch.

An inverted arrangement is also possible wherein said rocker bearing or knife-edge bearing is constituted by a V-shaped or U-shaped portion fixed to said supporting structure and bearing the lower said of a frame arranged at the lower edge of the roof pitch. In both cases, the invention provides, with an extremely simple and economical construction, a fulcrum which has no pivots, hinges, shafts or the like, and yet assures a perfect rotatable junction free from any drawback since it is practically unaffected by manufacturing tolerances and changes in the course of time. Moreover, said rocker bearing or knife-edge bearing may be easily and economically constructed, for example, by plate bending operations.

The same advantages of the invention may be achieved either with opening roofs comprising one or more individual pitches rotatably joined at their lower edges to a bearing structure, and with opening roofs comprising at least two pitches which are at an angle to each other and are pivoted to each other at the ridge thereof, the lower edge of one of said pitches being joined at a stationary fulcrum on a bearing structure, while the other edge of the other pitch is slidably guided substantially in a horizontal direction over said bearing structure so as to be moved either away from the stationary lower fulcrum of the other pitch to a roof closure position, or towards said fulcrum to a roof full-opening position, either manually or with the aid of any powered control means. In the latter case, in order to further simplify said rotatable junctions, according to another characteristic of the invention, said pivotal connection at the ridge between two roof pitches comprises two shaped members each fixed to the respective pitch and each comprising a cylindrical rod extension rotatably engaged in a corresponding cylindrical channel of an intermediate rotatable-connection channel member interposed between the two roof pitches, each of said cylindrical channels having a lead-in opening extending preferably over an angle smaller than 180° through which there is passed the portion connecting the associated cylindrical rod to the respective shaped member which is fixed to the roof pitch. The cylindrical rod extensions of the two shaped members fixed to the roof pitches at the ridge thereof are engaged into the respective cylindrical channels of the intermediate rotatable-connection channel member by longitudinally introducing them thereinto.

These and other characteristics of the invention and the advantages resulting therefrom will be more apparent from the following description of a preferred embodiment thereof, shown as a non-limiting example in the accompanying drawings, wherein:

Fig. 1 is a diagrammatic elevational view of an opening roof for greenhouses, according to the invention.

Fig. 2 is a vertical sectional view of the associated lower edges of the roof pitches according to Fig. 1, in the closed position of the roof.

Fig. 3 is a vertical sectional view on the line III-III of Fig. 2.

Fig. 4 is a sectional view of the pivotal connection between two pitches at the ridge.

Fig. 5 is an elevational view of a modified embodiment of the opening roof of Fig. 1.

Fig. 6 is a vertical sectional view of the associated lower edges of two pitches of the roof of Fig. 5, in the closed position of said roof.

Figs. 7 and 8 are vertical sectional views on the lines VII-VII and VIII-VIII of Fig. 6.

Fig. 9 is an elevational and partly sectional view of a further type of opening roof according to the invention.

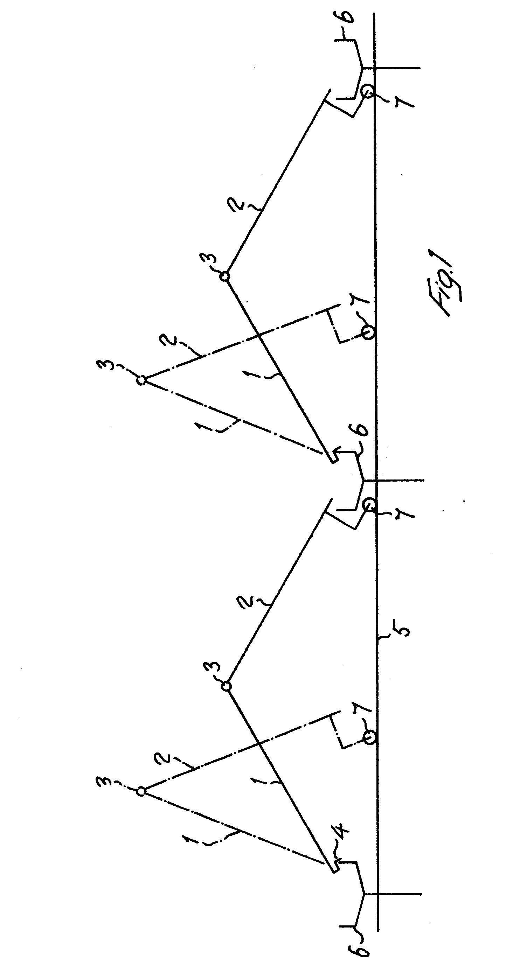

With reference to the Figures 1 to 4, the opening roof for greenhouses according to the invention comprises one or more pairs of pitches 1, 2 at an angle to each other and pivoted to each other at the ridge, as indicated at 3. The lower edge of a pitch 1 is fulcrumed at 4 on a bearing structure 5 for the roof, specifically at one side of one of the gutters 6 provided on the bearing structure 5 between the pairs of pitches 1 and 2. The lower edge of the other pitch 2 is slidably guided, by means of wheels 7, over the bearing structure 5 to be moved towards the lower fulcrum 4 of the associated pitch 1 and away therefrom. When the lower slidable edge of the pitch 2 is at the maximum distance from the stationary lower fulcrum 4 of the associated pitch 1, it sealingly engages the next gutter 6, and the roof formed by the pivoted pair of pitches 1, 2 is closed, as shown with solid lines in Fig. 1. Conversely, the roof is open when the lower slidable edge of the pitch 2 is at the minimum distance from the lower stationary fulcrum of the other pitch 1, as shown with dot-and-dash lines in Fig. 1.

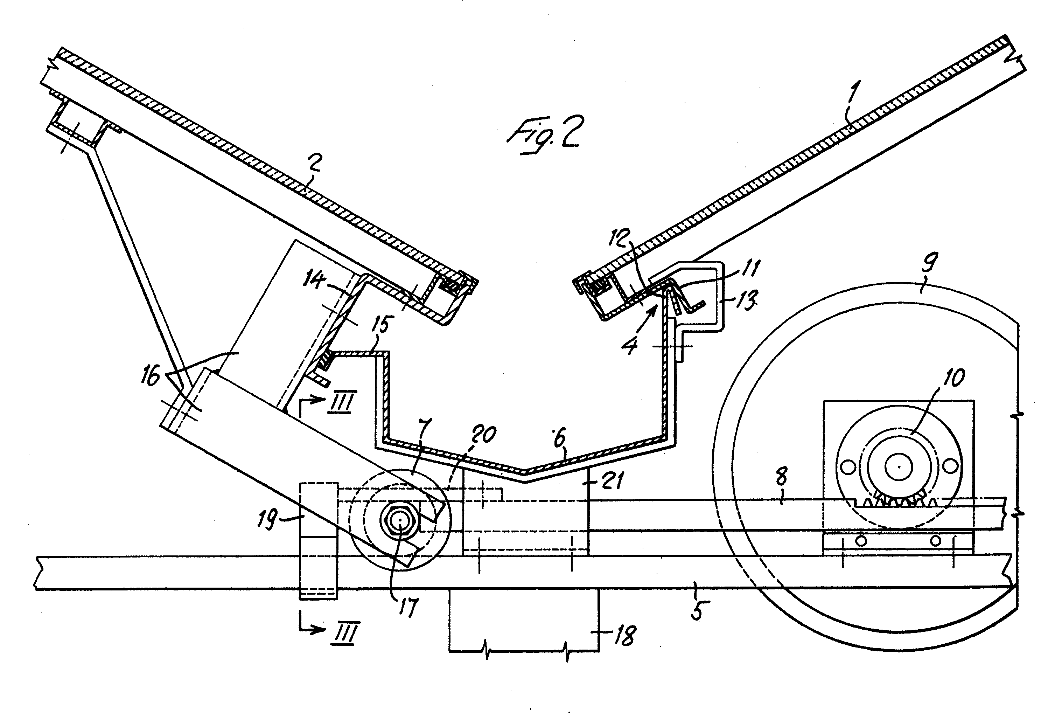

The lower slidable edge of each pitch 2 may be displaced individually and in any suitable manner, either manually or mechanically, thus causing either the opening or closing of only the respective portion of roof which is formed by the respective pair of pitches 1, 2. Preferably, however, the lower slidable edges of all the pitches 2 or of a group of two or more pitches 2 are displaced simultaneously in any suitable manner, either by hand or by a motor, and through any mechanism, thus causing either the opening or closing of the entire roof of a greenhouse or of only a portion of said roof. In the illustrated exemplary embodiment, the lower slidable edges of the roof pitches 2 are connected to a rack 8 which is slidably mounted on the bearing structure 5 and is actuated by a motor or a motor-reducer 9 through a pinion 10 which meshes with said rack 8 as shown in Fig. 2.

Specifically, with reference to Fig. 2, the stationary lower fulcrum 4 of each pitch 1 of the roof is constructed as a knife-edge bearing and comprises an inverted V-shaped angle member 11 secured to the corresponding lower edge of the roof pitch 1 and forming a part of the frame of said pitch 1. Said V-shaped angle member 11 extends, preferably, over the entire with of said pitch 1 and its apex rests pivotably on a knife-edge formed by the top edge 12 of the corresponding side wall of the gutter 6. In order to facilitate the rocking movement of the pitch 1 and to strengthen the top edge of said side wall of the gutter 6 bearing the angle member 11 of the lower edge of the roof pitch 1, said top edge 12 may be folded over in any manner, for example folded over into a V-shape as shown, or it may be strengthened otherwise. Moreover, the invention provides suitable binding means preventing the lower of the pitch 1 from disengaging from the stationary roof structure and preventing said lower edge and its angle member 11 from rising up from the respective knife-edge bearing formed by the top edge 12 of a side wall of said gutter 6. In the illustrated embodiment of Fig. 2, said binding means comprises a plurality of straps 13 secured to the gutter 6 and overlapping said angle member 11 as shown in Fig. 2.

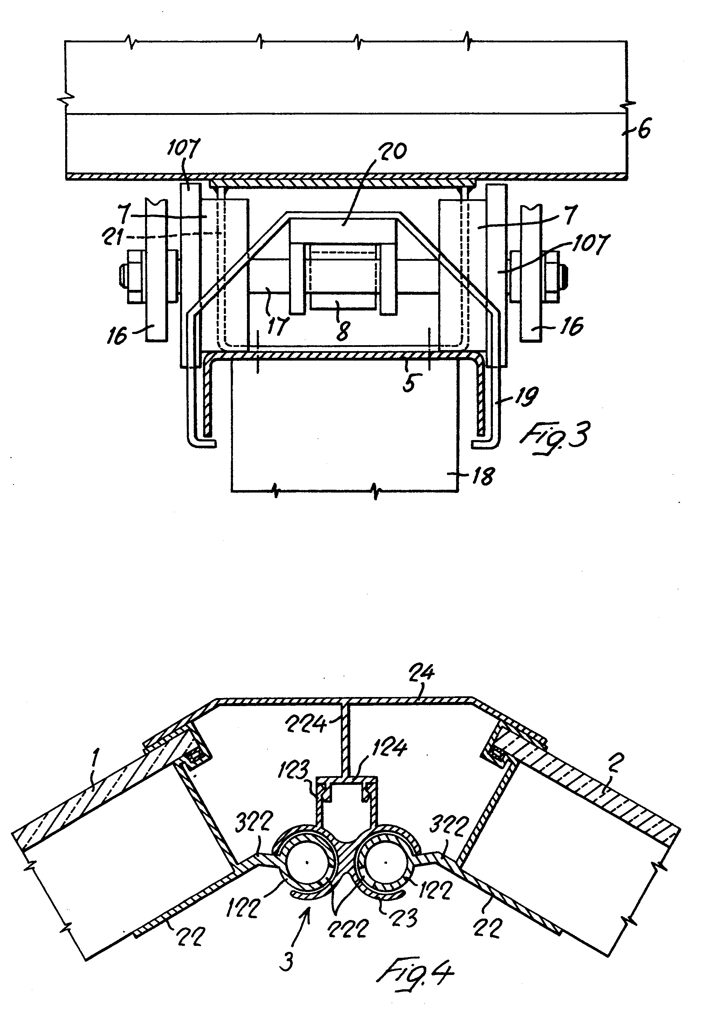

Figs. 2 and 3 also show the construction of the lower edge portion of the other roof pitch 2. This edge portion has also affixed thereto an end angle member 14 resting - in the roof closed position - against the edge of a substantially horizontal wing member 15 of the corresponding side of the gutter 6. Fixed to this angle member 14 are two arms 16 extending downwards and mounting at their lower ends a shaft 17 with two wheels 7 by means of which the lower edge of the pitch 2 slides on the bearing portion 5 of the roof. This structure may comprise, for example, an inverted U-shaped beam 5 supported by standards 18. The wheels 7 comprise flanges 107 engaging the outer sides of the beam 5. The lower edge of the roof pitch 2 is also bound by any suitable means to the bearing structure 5, so as to prevent this edge from rising up with the wheels 7 thereof from their sliding path. For this purpose, in the illustrated embodiment, the invention provides a strap 19 embracing the beam 5 with an inverted U-shape and engaging at the bottom the rims thereof, while being suitably connected to the shaft 17 of the wheels, e.g. by means of a stirrup 20 rotatably mounting therethrough said shaft 17 and having also affixed thereto said actuating straps 21 accommodating said actuating rack 8 therethrough. The roof pitches 1, 2 may be constructed in any suitable manner and are generally formed by peripheral frames which may either mount the panes directly or mount smaller pane-carrying frames. All the members mentioned above, specifically the gutters 6 and angle members 11 and 14, may be made of shaped plate or of channels. The lower edges of the two roof pitches 1, 2 extend beyond the knife-edge bearing 4 and beyond the wing member or shoulder 15 so as to terminate above said gutter 6 in the closed position of the roof.

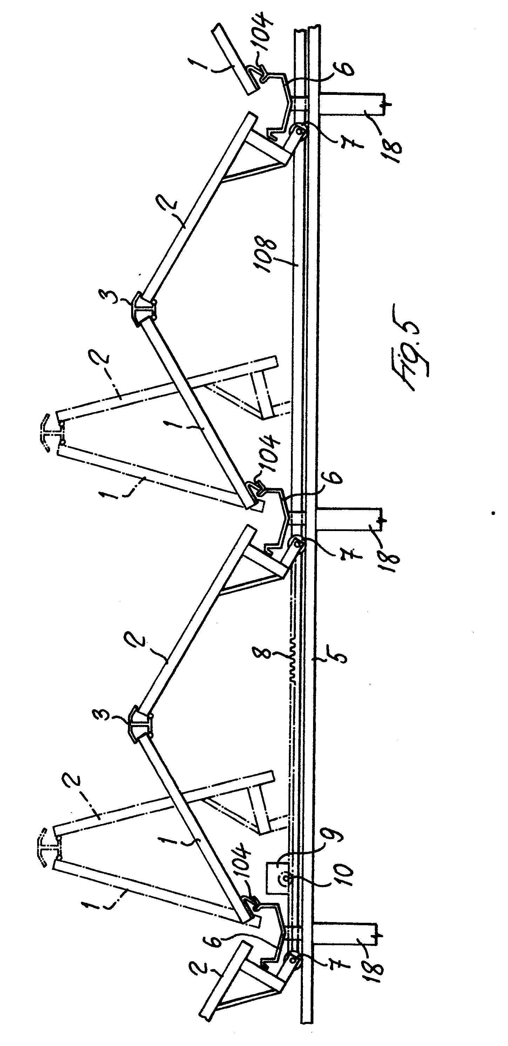

The pivotal connection 3 at the ridge between the two roof pitches 1 and 2 is shown in Fig. 4. Each of the opposite upper edges of the two pitches 1 and 2 has affixed thereto a shaped member 22 comprising a cylindrical rod extension 122, preferably of tubular construction and specifically formed with a longitudinal slit. Each cylindrical rod 122 extends parallel to the pivotal axis between the two pitches 1, 2 and is connected to the respective shaped member 22 through the intermediary of a web 322. The two roof pitches 1, 2 are pivotably connected to each other by an intermediate channel member 23 having two side-by-side cylindrical channels wherein said cylindrical rods 122 of the shaped members 22 fixed to said pitches 1, 2 are pivotably accommodated. The openings of the cylindrical channels of the channel member 23 extend each over an angle smaller than 180° and through them are passed the webs 322 connecting said cylindrical rods 122 to the respective shaped members 22. A double hinge is thus obtained which is formed by two side-by-side parallel hinges.

The intermediate rotatable-connection channel member 23 has an upright extension 123 lockingly receiving therein the foot-portion 124 of a central web 224 depending from a shed-shaped member 24 constituting the ridge of the roof between the two pitches 1, 2. In the illustrated embodiment, said upright extension 123 of the intermediate channel member 23 is through-shaped and is provided with inwardly-directed top lips which are engaged in corresponding side grooves in the foot-portion 124 of said central web 224 of the shed-shaped member 24. In the closed position of the roof, the top edges of the two pitches 1, 2 are in contact or nearly in contact against the undersurface of the two wing portions of the shed-shaped member 24, as shown in Fig. 4. Even in the opened position of the roof, said two wing portions of the shed-shaped member 24 extend over the respective top edges of the roof pitches 1, 2 thus preventing the rain water from reaching the pivotal connection 3.

The two cylindrical rods 122 of said shaped members 22 are introduced longitudinally endwise into the respective channels of the intermediate pivotal-connection channel member 23. The foot-portion 124 of the central web 224 of the shed-shaped member 24 is also introduced longitudinally into the upright through-shaped extension 123 of said intermediate channel member 23.

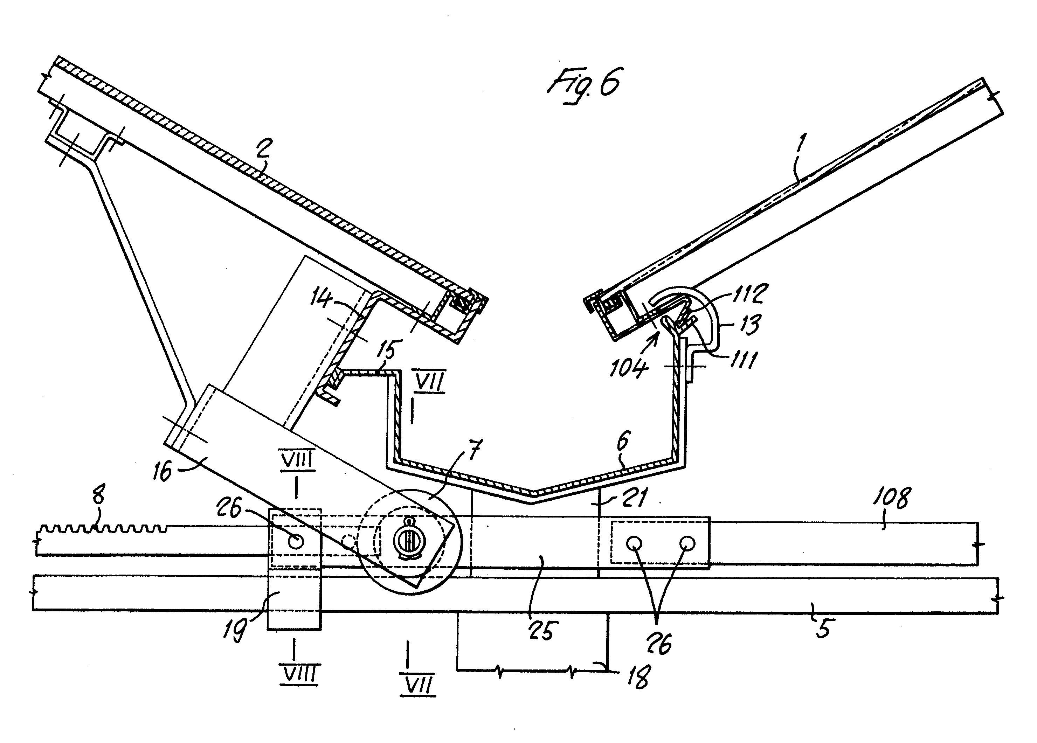

The modified embodiment of opening roof for greenhouses of the Figs. 5 to 8 is similar to the embodiment of the Figs. 1 to 4, the similar or equivalent parts being indicated by the same reference numerals. The main difference resides in the construction of the stationary lower fulcrum 104 of the pitches 1, said fulcrum 104 being constituted by a knife-edge bearing which is inverted with respect to the knife-edge bearing 4 of the Figs. 1 to 4. In fact, in the embodiment of the Figs. 5 to 8, the stationary lower fulcrum 104 of each pitch 1 is constituted by a V-shaped lower member 111 advantageously obtained by suitably bending the corresponding edge of a side wall of the gutter 6. The bottom edge of a knife-shaped member 112 provided at the lower edge of the pitch 1 rests on said V-shaped member 111.

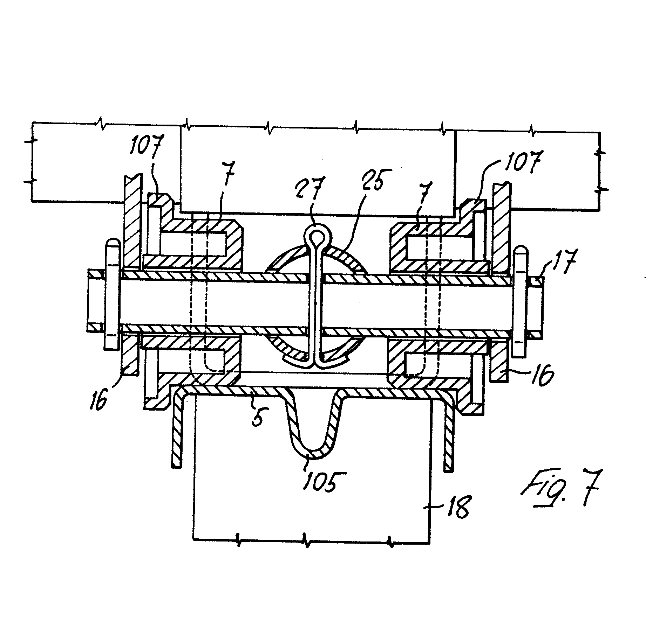

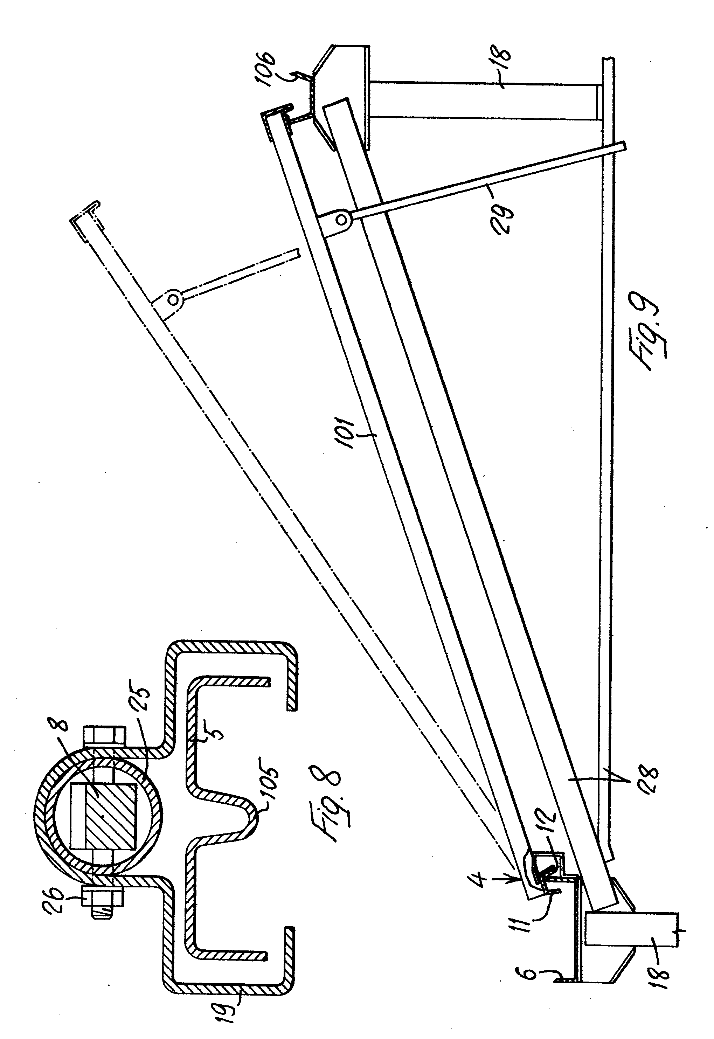

In the Figs. 5 and 6 it can also be seen that the rack 8 has a limited length, corresponding substantially to the stroke of the lower edge of each pitch 2, and is connected to the various pitches 2 by means of a rod 108. Specifically, as shown in the Figs. 6 and 8, said rack has a solid rectangular cross section and is linked to the rod 108 by means of a sleeve 25 receiving the rack 8 into an end thereof and the rod into the other end thereof, both secured to the sleeve 25 by means of transverse bolts 26. The sleeve 25 is embraced by a strap 19 that binds the lower edge of a pitch 2 to the beam 5 and is secured to said sleeve by means of one of the bolts 26.

Across the sleeve 25 is also passed a tubular pin constituting the shaft 17 for the wheels 7, said shaft being fixed to the sleeve 25, for example, by means of a cotter pin 27, as shown in Fig. 7. The wheels 7 may be made of plastics material and are rotatably mounted on the tubular shaft 17 between the two arms 16. The beam 5, carried by standards 18 and slidably supporting the wheels 7 at the lower edges of the pitches 2, is preferably formed of a bent plate having an inverted "U" configuration and comprising an intermediate longitudinal stiffening rib 105.

In both embodiments of opening roof shown in the Figs. 1 to 4 and 5 to 8, the track wherealong the wheels 7 of the pitches 2 are rolled, i.e. the top surface of the beam 5, may be slightly sloping in a given direction in order to assist the closing movement or, preferably, the opening movement of the roof. By virtue of this feature and of the remaining construction of the opening roof, a motor-reducer 9 of reduced power may be used to displace roofs, even if of large size.

The opening roof shown in Fig. 9 comprises one or more single sloping pitches 1. The lower edge of each pitch 101 is fulcrumed on the bearing structure 28 for the roof by means of a stationary fulcrum 4 in the form of a knife-edge bearing of the type described with reference to Figs. 1 to 4. Specifically, fixed to the lower edge of the pitch 101 is an inverted U-shaped or V-shaped member 11 rotatably resting with its apex, or apexes, on a knife-shaped member constituted by the top edge 12 of a gutter 6 fixed to a standard 18 of the bearing structure 28 for the roof. Said top edge 12 of the gutter 6 may also be folded over, for example into a "V" shape, as shown. The upper edge of the sloping pitch 101 rests, when in its closed position, on a side wall of a small gutter 106 located at the ridge and fixed to a further standard 18 of the bearing structure for the roof. The roof pitch 101 may be moved to the opened position, shown with dot-and-dash lines in Fig. 9, by rising up its upper edge more or less and by any means, such as by means of the rod 29, and thus swinging it about its lower fulcrum 4 constituted by said knife-edge bearing. Again, the knife-edge bearing at the lower edge of the roof-pent 1 may be inverted and constituted by a fulcrum 104 of the type shown in the Figs. 5 and 6.

CLAIMS

1. An opening roof, particularly designed for greenhouses, sheds and the like, comprising at least one pitch (1, 101) which is pivotably supported at the lower edge thereof at a stationary fulcrum (4, 104) on a bearing structure (5, 18, 28), characterized in that said stationary lower fulcrum (4, 104) of the roof pitch (1, 101) is consti-tuted by a type óf rocker bearing or knife-edge bearing (11, 12 or 111, 112).

2. An opening roof according to claim 1, characterized in that said rocker bearing or knife-edge bearing (4) is constituted by the top edge of an upright web (12) fixed to the bearing structure (5, 18, 28) and bearing thereon an inverted U-shaped or V-shaped portion provided at the lower edge of the roof pitch (1, 101).

3. An opening roof according to claim 1, characterized in that said rocker bearing or knife-edge bearing (104) is constituted by a V-shaped or U-shaped portion (111) fixed to the bearing structure (5, 18, 28) and bearing thereon the bottom edge of a web (112) provided at the lower edge of the roof pitch (1).

4. An opening roof according to claim 1 and 2, characterized in that said upright web (12) fixed to the bearing structure (5, 18) is made of a plate member and has a folded over top edge, for example, bent into the shape of an inverted "V".

5. An opening roof according to claims 1 and 2 or 4, characterized in that said upright web (12) fixed to the bearing structure (5, 18) is formed by a side wall of a gutter (6) which is substantially parallel to the axis of said stationary lower fulcrum (4).

6. An opening roof according to claim 3, characterized in that said U-shaped or V-shaped portion (111) fixed to the bearing structure (18, 28) is formed by the top edge of a side wall of a gutter (6) which is substantially parallel to the axis of the stationary lower fulcrum (104).

7. An opening roof according to one or more of the preceding claims, characterized by one or more straps (13) which are secured to the bearing structure (5, 18, 28) of the roof, e.g. to the gutter (6), and overlap a portion which is solidary with the lower of the pitch (1, 101) which is fulcrumed by means of a rocker bearing or knife-edge bearing (4, 104).

8. An opening roof according to one or more of the preceding claims, characterized in that the lower edge of the pitch (1, 101) extends above the gutter (6) beyond its knife-edge bearing (4, 104) on the top edge of the side wall of said gutter (6).

9. An opening roof according to one or more of the preceding claims, characterized in that the sloping roof pitch (101), which is fulcrumed with its lower edge through a rocker bearing or knife-edge bearing (4) to the bearing structure (18, 28) of said roof, rests with its upper edge on a shoulder (106) fixed to the bearing structure (18, 28) for the roof, means (29) being provided to rise up said upper edge of the pitch (101) away from said shoulder (106).

10. An opening roof according to one or more of the claims 1 to 8, characterized in that the pitch (1) of the roof, which is fulcrumed with its lower edge through a rocker bearing or knife-edge bearing (4, 104) to the bearing structure (5, 18) for the roof, is pivotably connected with its upper edge to the upper edge of another roof pitch (2), the latter being oppositely inclined and having a lower edge which is slidably guided through wheels (7) substantially horizontally along the bearing structure (5, 18) so as to be either moved away from said rocker bearing or knife-edge bearing (4, 104) at the lower edge of the other roof pitch (1, 101) to a closed position of the roof and moved towards said bearing (4, 104) to a maximum opening position of the roof.

11. An opening roof according to claim 10, characterized in that said slidable lower edge of the pitch (2), which is provided with one or more wheels (7) rolling on a corresponding guide (5) of the bearing structure (5, 18), is bound to said guide (5) with the aid of means preventing said edge of the pitch (2) from rising up while permitting its sliding movement.

12. An opening roof according to claim 10, characterized in that said slidable lower edge of the roof pitch (2) comprises at least one strap (19) which embraces said sliding guide (5) from its lower side.

13. An opening roof according to claim 10, characterized in that said slidable lower edge of the roof pitch (2) comprises two co-axial wheel (7) provided with flanges (107) engaging the outer sides of a rail (5) whereon said wheels may roll.

14. An opening roof according to claim 10, characterized in that said slidable lower edge of the roof pitch (2), when in the closed position, engages through a shoulder portion (14) thereof against a gutter (6) and terminates above said gutter.

15. An opening roof according to claim 10, characterized in that said pivotal connection (3) at the ridge between said two roof pitches (1, 2) comprises two shaped members (22) each secured to one of the pitches and each including a cylindrical rod extension (122) rotatably engaged in a corresponding cylindrical channel of an intermediate rotatable-connection channel member (23) arranged between the two roof pitches (1, 2), each of said cylindrical channels comprising a lead-in opening extending over an angle smaller than 180° and receiving therethrough the portion (322) connecting the associated cylindrical rod (122) and the respective channel member (22) that is fixed to said roof pitch (1, 2).

16. An opening roof according to claim 15, characterized in that affixed on said intermediate rotatable-connection channel member (23) is a shed-shaped member (24) extending above the upper edges of both roof pitches (1, 2).

17. An opening roof according to claim 10, characterized in that said pitch or pitches (1) having a slidable lower edge are connected to a slidable actuating rack (8) that can be displaced by means of a respective pinion (10) which may be actuated by hand and/or by a motor (9).

18. An opening roof according to claim 17, characterized in that said rack (8) has a limited length, substantially corresponding to the maximum stroke of the roof pitch (2) and is connected to the roof pitch or pitches (2) by means of extension rods (108).

19. An opening roof according to one or more of the claims 10 to 18, characterized in that said sliding track (5) for the wheels (7) of the pitch (2) having a slidable lower edge is slightly sloping in a given direction to the horizontal, preferably, so as to facilitate the opening movement of the roof.

Fig.1

Fig.2

*Fig.3*

*Fig.4*

Fig.5

4/7

0217978

Fig. 6

Fig. 7

26

8

25

19

5

105

*Fig. 8*

106

101

29

18

4

11

12

6

18

28

*Fig. 9*

European Patent
Office

**EUROPEAN SEARCH REPORT**

0217978

Application number

EP 85 11 2870

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-A- 163 452 (STEINEMANN) <br> * Whole document * | 1,2,9 | A 01 G 9/24 <br> E 04 B 7/16 |
| Y | --- | 10,17 | |
| X | CH-A- 193 847 (KRÄHE) <br><br> * Whole document * <br> --- | 1,2,4, 5,7,8 | |
| Y | FR-A-2 272 593 (GABLER) <br> * Page 4, line 31 - page 7, line 12; figures 1-6 * | 10,17 | |
| A | --- | 14-16 | |
| A | DE-C- 616 449 (AUGENSTEIN) <br><br> * Whole document * <br> --- | 1,2,4, 5,8,10 ,11 | TECHNICAL FIELDS SEARCHED (Int. Cl.4) <br><br> A 01 G <br> E 04 B |
| A | FR-A-1 230 747 (CAMBRIDGE) <br> * Page 3, right-hand column, paragraph 4; figures 3,7 * <br><br> ----- | 15 | |

The present search report has been drawn up for all claims

| Place of search | Date of completion of the search | Examiner |
|---|---|---|
| THE HAGUE | 10-06-1986 | HERYGERS J.J. |